# EUROPEAN PATENT APPLICATION

(11) **EP 4 283 728 A1**
(43) Date of publication of application: **29.11.2023**
(21) Application number: 22175484.9
(22) Date of filing: 25.05.2022
(51) Int. Cl.: H01M 8/04111, F16C 17/26

(54) **GAS BEARING SYSTEM, USE OF GAS BEARING MEANS IN A FUEL CELL SYSTEM, FUEL CELL SYSTEM, ARRANGEMENT OF SYSTEMS WITH CONSUMERS OF PRESSURIZED GAS AND VEHICLE**

(71) Applicant: KNORR-BREMSE Systeme für Nutzfahrzeuge GmbH, 80809 München (DE)
(72) Inventor: Heigl, Korbinian, 80939 Munich (DE); Geis-Esser, Daniel, 81377 Munich (DE); Compera, Yves, 85748 Garching (DE)

(57) **Abstract**

The invention relates to a fuel cell system, comprising a fuel cell, a fuel cell compressor for feeding the fuel cell with pressurized gas, comprising gas compression means, a rotatable shaft for driving the gas compression means, and a gas bearing system supporting the shaft, wherein the gas bearing system comprises gas-dynamic bearing means and gas-static bearing means, and a bearing gas supply for feeding the gas-static bearing means with pressurized gas.

## Description

The invention relates to gas bearing systems, the use of gas bearing means for fuel cell systems, a fuel cell system, an arrangement of systems with consumers of pressurized gas and a vehicle with the fuel cell system and/or the arrangement.

It is known to use fluid bearings to support rotating shafts. Fluid bearings support the load of the shaft by a thin layer of rapidly moving pressurized fluid between the bearing surfaces. For example, combustion engines make use of oil -fluid bearings. However, oil-fluid bearings are impractical in applications where oil leakage can be destructive. For example, in air compressors to be used to feed fuel-cells, oil leakage into the fuel-cell or into the pneumatic braking system, must be avoided.

It is therefore necessary to tailor fluid bearings to their intended use. For air compressors, gas bearings turned out to be advantageous. One advantage of gas bearings, in particular of air bearings, is that they significantly reduce friction between the moving bearing surfaces without the need of complex sealing means to avoid leakage. In gas bearings, a thin load-bearing layer of pressurized gas leads to low friction between the relatively moving surfaces. There are two main types of gas bearings, namely gas-static (aero-static) bearings and gas-dynamic (aero-dynamic) bearings. In a gas-static bearing, pressurized gas is provided from a pressurized air supply, for example a pump, a compressor, or a pressurized gas reservoir, to form the load-bearing layer. In a gas dynamic bearing, relative movement between the surfaces of the bearing is used to generate the load-bearing layer with no external supply of pressurized gas.

The problem of gas-dynamic bearings is that below the so called "lift-up speed", the pressure generated in the layer of gas is insufficient to support the load of the shaft, which leads to contact between the bearing surfaces. At this mode of operation, friction is increased dramatically, which reduces the efficiency of the bearing and increases wear of the bearing. Gas-static bearings avoid this problem by using an external supply of pressurized gas which enables support of the load regardless of the rotation speed of the shaft. However, the external supply for pressurized gas increases the complexity, costs, space requirements and energy consumption of the system.

WO 2017 060 679 A1 discloses a turbo charger with a shaft being supported by two radial gas bearings, each of which comprises, integrated in one bearing, gas-static bearing means and gas-dynamic bearing means. However, these combined gas-static-dynamic bearings turned out to be complex and inefficient in terms of pressurized gas consumption. For feeding the gas-static bearing means, WO 2017 060 679 A1 suggests using either a separate gas supply (external supply) or feeding the gas-static bearing means with pressurized air obtained from the turbo charger itself (internal supply). The external supply comes with the same problems as pure gas-static bearings, namely in that it increases the complexity, costs, space requirements and energy consumption of the system. A problem of the internal supply is that, at low speeds of the turbo charger shaft, in particular during start-up and shut down, the compressor might not generate sufficiently pressurized gas for the formation of the load-bearing layer so that a similar problem as for pure gas-dynamic bearings occurs.

Further, as the turbocharger of WO 2017 060 679 A1 is driven by exhaust gas from an internal combustion engine, the compressed air provided by the turbo charger bears to risk of containing impurities, such as oil or exhaust gas, which could accumulate in the feed line and/or the bearing surfaces of the gas-static bearings and thereby reduce the lifetime and in the worst-case lead to a defect of the entire system. Further, the risk that the pressurized air obtained from the turbocharger of WO 2017 060 679 A1 could contain impurities, in particular oil, makes it useless for fuel cells which react extremely sensitive to impurities.

It is an object of the invention to overcome the drawbacks of the prior art, in particular to provide gas bearing systems, the use of gas bearing means for fuel cell systems, a fuel cell system, an arrangement of systems with consumers of pressurized gas and a vehicle with the fuel cell system and/or the arrangement which decreases the overall energy consumption, system complexity, costs and/or increases the lifetime of the system, in particular of the gas bearings and/or of the fuel cell.

This object is solved by the independent claims. Preferred embodiments are given in the dependent claims.

One aspect of the invention relates to a fuel cell system. The fuel cell system comprises a fuel cell and a fuel cell compressor for feeding the fuel cell with pressurized gas. The fuel cell compressor comprises gas compression means, a rotatable shaft for driving a gas compression means and a gas-bearing system supporting the shaft. The gas-bearing system comprises gas-dynamic bearing means and gas-static bearing means. Further, the fuel cell system comprises a bearing gas supply for feeding the gas-static bearing means with pressurized gas.

With the inventive combination of gas-dynamic bearing means and gas-static bearing means for the shaft of the fuel cell compressor, the lifetime of the fuel cell system can be increased while the overall energy consumption is achieved, because above the lift-up speed, the gas bearing system can be operated purely with the gas-dynamic means, thereby saving energy for feeding the gas-static bearing means. Below the lift-up speed, the gas-static bearing means can be supplied with pressurized gas by the bearing gas supply which avoids, or at least reduces, contact between bearing surfaces during operation below the lift-up speed, thereby reducing wear of the bearing surfaces. This increases the lifetime of the bearings, but also of the fuel cell, as the formation of dust by grinding bearing surfaces, which could damage the fuel cell, is avoided. The inventive concept has been found to be of particular advantage for vehicles, in particular for commercial vehicles or rail vehicles, as these vehicles operate fuel cells with a plurality of start-stop-cycles, which, without the inventive concept, leads to a reduced lifetime, which in turn is inacceptable for commercial vehicles and rail vehicles due to the long lifetime expectation associated with such vehicles. In particular, the fuel cell system is designed, in particular in terms of size, weight and/or electrical power output, to be used for vehicles, in particular commercial vehicles or rail vehicles, in particular as electrical power source for driving electrical machines of the vehicle, such as electric motors, and/or air conditioners.

In particular, the fuel cell comprises at least one anode chamber and at least one cathode chamber. Preferably, the at least one cathode chamber comprises a fluid inlet and a fluid outlet. Preferably, the at least one cathode chamber is configured to receive pressurized gas, in particular pressurized air. Further, the at least one cathode chamber preferably comprises one fluid outlet for releasing discharge fluid, in particular unreacted air and water, from the cathode chamber. The at least one anode chamber particularly comprises a fluid inlet, in particular a gas inlet, more particular a hydrogen gas inlet. Further, the anode chamber may comprise a fluid outlet, in particular a gas outlet, more particular an outlet for annulated hydrogen.

In particular, the fuel cell compressor is fluidly connected with the fuel cell for feeding the fuel cell with pressurized gas. For this purpose, the fuel cell compressor and the fuel cell are preferably connected by a gas line. Particularly preferred, the fuel cell compressor is fluidly connected with at least one cathode or anode chamber of the fuel cell, preferably with at least one cathode chamber of the fuel cell.

Preferably, the fuel cell system comprises a humidifier being fluidly connected with the fuel cell and the fuel cell compressor in that pressurized gas obtained from the fuel cell passes the humidifier, in particular to be humidified, before reaching the fuel cell, particularly the cathode chamber of the fuel cell. In particular, the humidifier is fluidly connected with a fluid outlet line, in particular a fluid outlet line receiving exhaust gas from the fuel cell, in particular from the at least one cathode chamber. Particularly preferred, the humidifier is configured to extract water from the exhaust gas leaving the fuel cell, in particular the cathode chamber, and to load the pressurized gas leaving the fuel cell compressor with that water before the pressurized gas enters the anode chamber. Preferably, the fuel cell system comprises for this purpose a fluid inlet line guiding compressed gas from the fuel cell compressor over the humidifier to the fuel cell, in particular to the cathode chamber, and a fluid outlet line guiding the exhaust gas from the fuel cell, in particular from the cathode chamber, to the humidifier.

Preferably, the fuel cell system further comprises a bypass line fluidly connecting the fluid inlet line with the fluid outlet line in that compressed gas can leave the fuel cell compressor without being fed into the fuel cell (bypassing the fuel cell). Preferably, the bypass line is located before the humidifier in that the humidifier can be bypassed, too. In particular, the bypass line comprises a bypass valve being adapted to open when a predetermined pressure is achieved to avoid that the fuel cell and/or the humidifier are subjected with a pressure which might cause damages.

Preferably, the fuel cell compressor is driven by a motor, in particular an electric motor, more particular an electric motor using the shaft of the fuel cell compressor as rotor and a stator surrounding the rotor. To further decrease energy consumption of the system, an expander can be used which is driven by exhaust gas leaving the fuel cell, in particular the at least one cathode chamber. The expander can be used to support the motor in driving the fuel cell compressor. Preferably, the previously described bypass line can be connected with the fuel cell compressor and the expander in that compressed gas leaving the fuel cell compressor is directly fed into the expander.

Particularly preferred, the fuel cell compressor is configured to feed the fuel cell, in particular the at least one cathode chamber, with compressed air. Further, the fuel cell, in particular the at least one anode chamber, comprises a fluid line, in particular a gas line system, for feeding the fuel cell, in particular the anode chamber, with fuel, in particular with gaseous fuel, more particular with hydrogen.

The gas compression means can be realized by any known gas-compressing means being driven by a rotatable shaft, for instance by piston-cylinder arrangements and by compressor wheels. Preferably, the gas-compressing means comprises a compressor wheel. In particular, the compressor wheel is connected with the shaft in that it rotates when the shaft rotates. In particular, the compressor comprises a compressor housing defining a gas, in particular air, inlet and a pressurized gas, in particular air, outlet. The compressor wheel and the compressor housing are designed in that, when the compressor shaft and the wheel rotate, gas, in particular ambient air, is sucked in via the air inlet, compressed and expelled as compressed, (pressurized) gas through the gas outlet. The thus pressurized gas is then directed, in particular by the previously described gas lines, to the fuel cell.

In particular, the shaft is rotatable around a shaft axis. In particular, the shaft has a rotation symmetrical shape. In particular, the shaft comprises a cylindrical portion and/or a disc-shaped portion. Preferably, the shaft comprises a cylindrical portion and a protruding portion extending within the disc-shaped portion. Particularly preferred, the protruding portion is disc-shaped. In particular, the cylindrical portion is used for radially supporting the shaft, in particular by radial bearing means. The protruding portion, in particular the disc-shaped portion, is preferably used for axially supporting, in particular by axial bearing means, the shaft.

A gas bearing within the meaning of the present invention is to be understood as comprising a moving part and a static part, the parts having opposed surfaces separated by a gap. Gas-bearing means are to be understood as any means being configured to generate a layer of pressurized gas in the gap of the gas bearing due to gas-dynamic effects in response to relative movement between the moving and the static parts. Gas-static bearing means are to be understood as any means allowing to deliver pressurized gas from the gas-bearing supply into the gap to generate a layer of pressurized gas. Thereby, a gas bearing within the meaning of this invention can comprise the gas-static bearing means and gas-dynamic bearing means. Such gas bearing within the meaning of this invention will be called hybrid gas-static-dynamic bearing. Contrary to that, a gas-dynamic bearing within the meaning of this invention shall relate to a bearing having means for providing gas-dynamic effects but being free of means for providing gas-static effects. In the same manner, a gas-static bearing within the meaning of this invention shall relate to a gas bearing having means for providing a layer of pressurized gas via the bearing gas supply that is substantially free of means providing gas-dynamic effects in response to relative movement between the moving and the static parts. In this regard, "substantially" shall be understood in that gas-static bearings shall be free of intentional means for providing gas-dynamic effects. Of course, a gas-static bearing might also provide gas-dynamic effects as side effects. As long as no intentional gas-dynamic bearing means are provided, respective bearings shall be interpreted as gas-static bearings within the meaning of this invention.

Gas-static bearing means within the meaning of this invention particularly comprise gas passages allowing pressurized gas from the bearing gas supply to enter into the gap between the opposed surfaces. Preferably, the gas passages are realized in the static part of the gas bearing. In particular, the gas passages can be realized by nozzles, microchannels, micronozzles or by porous structures. Known examples making use of such gas passages are, for example, conventional nozzle air bearings, which make use of nozzles as gas passages, and centered air barriers, which make use of porous structures as gas passages. The gas-static bearing means can be an inlet-throttled gas bearing means and/or an outlet-throttled gas bearing means. Preferably, the gas-static bearing means are provided by a nozzle and a bearing or by a centered air bearing. According to one example of the invention, these preferred gas-static bearings are free of gas-dynamic bearing means so that they will be subsequently called gas-static bearings. According to another embodiment of the invention, these gas-static bearings are provided additionally with gas-dynamic bearing means so that they will subsequently be called hybrid gas-static-dynamic bearings.

Gas-dynamic bearing means can particularly be realized by cylindrical bearings, multi-slide-faced bearings, spiral-groove bearings and/or foil bearings/spring bearings. Preferably, the dynamic bearing means are realized by spiral groove bearings or by foil bearings. As previously described, these bearings can be used as "pure" gas-dynamic bearings, i.e., without gas-static bearing means, or as hybrid gas-static dynamic bearings by adding gas-static bearing means.

As previously described, the gas-dynamic bearing means, and the gas-static bearing means can be realized by separate gas bearings or can be integrated into hybrid gas-static-dynamic bearings. In both cases, the fuel cell compressor comprises at least one gas bearing. The gas bearing comprises a moving part and a static part. Preferably, the moving part is carried by the rotatable shaft. Further, the fuel cell compressor preferably comprises a housing. Preferably, the static part is carried by the housing. In particular, the gas bearing system is configured to support the shaft radially against the housing. For this purpose, the bearing system can comprise at least one radial gas-static-dynamic bearing. Preferably, a gas bearing means comprises two radial gas-static-dynamic bearings being spaced from each other in axial direction of the shaft, in particular being spaced from each other by a motor, in particular an electric motor, for driving the shaft and/or by a protruding portion, in particular a disc-shaped portion for axially supporting the shaft extending radially from the cylindrical portion of the shaft.

Alternatively, the gas bearing system can comprise at least one separate radial gas-dynamic bearing and at least one separate radial gas-static bearing for radially supporting the shaft. Preferably, the gas bearing system comprises at least two separate gas-dynamic bearings and at least two separate gas-static bearings for radially supporting the shaft. Preferably, two sets of separate bearings, each comprising a gas-static bearing and a gas-dynamic bearing, are provided. Preferably, the two sets of radial bearings are spaced from each other in axial direction. Preferably, a motor, in particular an electric motor for driving the shaft and/or a protrusion, in particular a disc-shaped portion of the shaft, for axially supporting the shaft, are located in axial direction in between the two sets of radial gas bearings.

Additionally or alternatively to the previously described radial gas bearings, the gas bearing system can comprise at least one axial gas bearing. The at least one axial gas bearing particularly comprises a moving part and a static part. In particular, the static part is carried by a housing of the fuel cell compressor. The dynamic part is particularly carried by the shaft, in particular by the previously described protruding, particularly disc-shaped part.

In one embodiment, the axial gas bearing comprises at least one axial hybrid gas-static-dynamic bearing, preferably at least two axial hybrid gas-static-dynamic bearings being spaced from each other in a radial direction. In another embodiment, the at least one axial gas bearing can comprise at least one group of one separate gas-dynamic bearing and one separate gas-static bearing. Preferably, the at least one axial gas bearing comprises two such groups of separate gas-dynamic bearings and gas-static bearings being spaced from each other in radial direction, preferably being located on opposite sides of the shaft axis in radial direction.

In a preferred embodiment, the gas bearing system is configured to support the shaft in radial direction and in axial direction. This can be realized by the previously described at least one, preferably at least two, radial gas bearings and the at least one, preferably at least two, axial gas bearings (multi-bearing solution) or by a single gas bearing supporting the shaft in radial and in axial direction (single-bearing solution).

The multi-bearing solution has been found to be particularly advantageous in combination with foil bearings as gas-dynamic bearing means. For this multi-bearing solution, two embodiments have been found to be particularly preferred, namely the use of two radial hybrid gas-static-dynamic bearings and two axial hybrid gas-static-dynamic bearings, in particular as described above, and the use of two groups of separate gas-dynamic and gas-static bearings for the support in radial direction and of two such groups for the support in axial direction, in particular as described above.

The single-bearing solution has been found to be particularly advantageous in combination with the use of spiral-groove bearing means for providing the gas-dynamic bearing means. A preferred embodiment of this solution is to provide a shaft with a cylindrical portion and a disc-shaped portion forming the moving part of the gas bearing, wherein the static part is provided by a hollow cylindrical portion extending around the cylindrical portion of the shaft and forming a cylindrical gap in between, and a perforated disc-shaped portion extending parallel to the disc-shaped portion of the shaft and forming a perforated disc-shaped gap in between both portions. In such an embodiment, the shaft, in particular the cylindrical portion and the disc-shaped portion of the shaft, comprise spiral grooves for generating a gas-dynamic effect in response to the rotation of the shaft.

In particular, the gas-dynamic bearing means and the gas-static bearing means are integrated in at least one hybrid gas-static-dynamic bearing, preferably in at least two, more preferably in at least three, gas-static-dynamic bearings. Alternatively, the gas-dynamic means and the gas-static means are provided by separate gas bearings, preferably by at least two gas-dynamic bearings and at least two gas-static bearings, more preferably by at least three gas-dynamic bearings and at least three gas-static bearings, more preferably by a gas bearing system as described below with respect to the respective aspects of the invention.

Preferably, the bearing gas supply is configured to supply the gas-static bearing means by a pressurized gas obtained from the fuel cell compressor (internal supply) or by pressurized gas obtained from an external gas supply (external supply), in particular from a brake gas supply of a braking system, in particular as described below.

An advantage of the internal supply is that no additional compressor is needed, thereby decreasing complexity, costs and space requirements of the system. The fuel cell compressor has been found to be particularly suitable for an internal supply as fuel cells require a high purity grade to avoid damage to the fuel cell, e. g. if oil is transported into the fuel cell by the compressed gas. Therefore, the compressed gas obtained from the fuel cell compressor can also be used to feed the gas-static bearings without risking their pollution.

A problem of the internal supply is that, below the lift-up speed, the fuel cell compressor might not generate a sufficient pressurized gas for the formation of the load bearing layer of pressurized gas by the gas-static bearing means. The inventors have found that this problem can be solved by using a reservoir for storing pressurized gas. Preferably, the fuel cell system comprises a reservoir for storing pressurized gas. The reservoir can be fluidly connected with the fuel cell compressor in that the fuel cell compressor can feed the reservoir with pressurized gas. Preferably, the fuel cell compressor comprises for this purpose a gas line connecting the fuel cell compressor with the reservoir. Additionally, the gas supply can comprise a control being configured to control the flow rate of the pressurized gas from the fuel cell compressor to the reservoir. In particular, the control can be configured to start and stop feeding the reservoir with compressed gas from the fuel cell compressor. In particular, the control is configured to feed the reservoir when the rotatable shaft rotates with high rotational speed, in particular of at least 1 time, 1.5 times, 2 times, 2.5 times or 3 times the lift-up speed. Thereby, it can be ensured that the reservoir can be fed with pressurized gas of high pressure, in particular of up to 2 bar, 2,5 bar or 3 bar. To provide the internal supply, the bearing gas supply can comprise a gas line fluidly connecting the gas outlet of the compressor with the gas-static bearing means. Between the outlet of the fuel cell compressor and the gas-static bearing means, a reservoir for storing pressurized gas, in particular as described above, and/or a control being configured to feed the gas-static bearing means in dependance of the rotational speed of the shaft end and/or with gas of predetermined pressure can be provided. The control can comprise individual gas lines for individually feeding each gas-static bearing means. For example, if at least two, three or four gas-static bearing means are provided, the bearing gas supply can comprise at least two, three or four gas lines fluidly connecting the control with the respective gas-static bearing means/gas-static bearings.

An advantage of the external supply is that pressurized gas can be provided independent of the pressurized gas provided by the fuel cell compressor. For example, pressurized gas can be provided even if the fuel cell compressor stands still which is of particular advantage for providing the load bearing layer during start-up of the fuel cell compressor. Further, pressurized gas of a larger pressure can be provided. In particular, fuel cells usually require pressurized gas, in particular pressurized air, of maximally 2 to 3 bar. In contrary thereto, to provide a thin load bearing layer, it can be advantageous to provide a pressure of 4, 5, 6, 8, 10 or 12 or 13 bar. Such high pressurized gas can be provided by an external gas supply. The inventors have found that in vehicles, in particular commercial vehicles and rail vehicles, with a pneumatic braking system, the gas supply of the braking system (brake gas supply) can be advantageously used as external gas supply. In particular, the inventors have found out that the brake gas supply also has high requirements on purity of the compressed gas to avoid damage in the braking system. Therefore, the pressurized gas provided by a brake gas supply can be used to feed gas-static bearings of the fuel cell compressor without risking that pollutants, in particular oil, enter and thereby damage the fuel cell. A further advantage is that brake gas supplies in particular of commercial vehicles and rail vehicles, are particularly configured to generate pressurized gas with at least 5, 8, 10 or 12 bar, in particular up to 13 bar. This highly pressurized gas can be advantageously used for feeding the gas-static bearing means of the fuel cell compressor. For the external supply, the bearing gas supply particularly comprises a gas line fluidly connecting the gas-static bearing means with the external gas supply. In particular, the bearing gas supply of the external supply can comprise a reservoir for storing pressurized gas from the external gas supply and/or a control being configured to feed the gas-static bearing means in dependance of the rotational speed of the shaft and/or with gas of a predetermined pressure, in particular as described above with respect to the internal supply.

In particular, regardless of whether internal or external supply is used, the gas bearing supply comprises a reservoir for storing pressurized gas, in particular pressurized gas with at least 5, 8, 10 or 12 bar. In either case (internal or external) supply, the reservoir enables feeding the gas-static bearing means independent from the compressor being used for feeding the reservoir. Additionally or alternatively, the bearing gas supply comprises a control being configured to feed the gas static bearing means in dependance of the rotational speed of the shaft and/or with gas for a predetermined pressure. In particular, the control is configured to feed the gas static bearing means during start-up and shutdown of the fuel cell compressor. In particular, the controls configured to feed the gas static bearing means if the fuel cell compressor shaft rotates with a rotational speed below a predetermined lift-up speed. In particular, the control is configured to feed the gas static bearing means with a pressure of at least 1.5 bar, 2 bar, 3 bar, 4 bar, 5 bar, 6 bar, 7 bar, 8 bar, 10 bar or 12 bar. In particular, the bearing gas supply comprises one gas line for each gas-static bearing mean, in particular for each gas-static bearing, fluidly connecting the control with each gas-static bearing mean, in particular with each gas-static bearing. Preferably, the gas-dynamic bearing means are realized by spiral groove bearing means, in particular by spiral groove bearings, or by foil bearing means, in particular by foil bearings.

It shall be clear that the previously described embodiments with respect to the gas-dynamic bearing means and the gas-static bearing means, in particular with respect to the hybrid gas-static-dynamic bearings and their realization as separate gas bearings, the implementation of axial and radial gas bearings and the preferred realizations of the gas-dynamic bearing means, in particular by spiral groove bearings and by foil bearings, and of the gas-static bearing means, can advantageously be realized in the subsequently described aspects of the invention, in particular the subsequently described arrangement as well the subsequently described gas bearing systems. The same applies to the bearing gas supply, in particular with respect to the use of an internal supply, an external supply, a reservoir and/or a control, which can be advantageously realized in the subsequently described aspects of the invention, in particular in the subsequently described arrangement and gas bearing systems.

One aspect of the invention, which can be combined with the previous and subsequently described aspects of the invention and vice versa, relates to an arrangement of a system with consumers of pressurized gas. The arrangement comprises a braking system with a brake being actuatable by pressurized gas and brake gas supply for feeding the brake with pressurized gas. The arrangement further comprises an additional system comprising an additional consumer of pressurized gas, wherein the additional consumer is fluidly connected with the brake gas supply so that the additional consumer is feedable with pressurized gas from the brake gas supply.

In particular, the brake being actuatable by pressurized gas shall be understood as a consumer of pressurized gas. The braking system can comprise a plurality of such brakes, and it shall be clear that the additional consumer of pressurized gas shall be different from a brake, in particular shall be a consumer which is not part of the braking system. As described below, a preferred embodiment of the additional consumer comprises gas-static bearing means, in particular gas-static bearing means of a compressor, in particular of a fuel cell compressor. Further, it shall be clear that the additional system shall not be a part of the braking system, such as a compressor of the braking system. Further, the additional system shall not be a second braking system. In particular, the additional system is a system being different to a braking system or components thereof.

As described below, a preferred embodiment of the additional system is the previously described fuel cell system.

As previously described, the high purity grade of compressed gas provided by brake gas supplies and the high pressure of its compressed gas makes the brake gas supply suitable for other consumers of pressurized gas. In particular, the high purity grade enables using the pressurized gas for consumers of pressurized gas which can come into contact with process gas, in particular air, of fuel cells. Further, the high pressure of pressurized gas obtained from brake gas supplies makes the pressurized gas usable for a plurality of applications. As described above, one such application is the use for gas-static bearing means.

Preferably, the break gas supply comprises a brake compressor for producing pressurized gas. Preferably, the brake gas supply further comprises a gas line system for feeding the brake and the additional consumer with pressurized gas obtained from the brake compressor. For this purpose, the gas line system can comprise at least one brake gas line for feeding the brake with pressurized gas and at least one additional consumer gas line for feeding the additional consumer with pressurized gas. The at least one brake gas line can be fluidly connected with a brake system gas circuit for controlling the pressurized gas being fed to the brake. In particular, the braking system can comprise a plurality of brakes. Preferably, a plurality of brake gas lines are provided, which are preferably controlled by the gas treatment unit. Additionally or alternatively, the braking system can comprise a control, in particular a braking system control, for initiating and stopping gas flow from the brake compressor to the brake and/or to the additional consumer.

For this purpose, the brake gas supply can comprise a gas treatment unit. The gas treatment unit can be configured to split a pressurized gas flow leaving the brake compressor into at least two pressurized gas flows, namely one being fed by the gas line system to the brake, and one being fed by the gas line system to the additional consumer. The air treatment unit can also be configured to treat the pressurized gas in terms of humidity, pressure, for instance decreasing the pressure by throttles, for preparing the pressurized gas for the intended purpose. In particular, the air treatment unit can be configured to treat the pressurized gas to be fed to the brake differently than the pressurized gas to be fed to the additional consumer. In particular, the air treatment unit can be controlled by the previously mentioned control.

Preferably the brake compressor is an oil-free brake compressor. In particular, the brake compressor comprises a rotatable shaft being supported by oil-free bearings, in particular by roller bearings. Thanks to the use of oil-free bearings, the purity of the compressed gas can be ensured which makes the compressed gas suitable for a plurality of additional consumers, in particular for gas bearings, more particular for gas bearings to be used in compressors of fuel cell systems.

In one embodiment, the additional consumer comprises at least one, preferably at least two or three, gas-static bearing means, in particular gas-static bearings, being fluidly connected with the brake gas supply. Preferably, the gas-static bearing means are realized as described above with respect to the fuel cell system. Additionally, the additional system preferably comprises at least one, more preferably two or three, gas-dynamic bearing means, in particular as described above with respect to the fuel cell system. With this configuration, the additional system can benefit from the above-described advantages of the combination of gas-dynamic and gas-static bearing means. Thereby, the use of the braking gas supply brings the advantage of an internal supply (no additional gas compressor for supplying the gas-static bearing means is required) while at the same time having the advantages of an external gas supply (pressurized gas can be provided independent of the operation mode of the additional system).

Preferably, the gas-static bearing means, and in particular the gas-dynamic bearing means, support a rotatable shaft, in particular a rotatable shaft of a compressor, more in particular a rotatable shaft of an oil-free compressor, most in particular of an oil-free compressor of a fuel cell. Thereby, the gas bearing means can be realized as described above with respect to the fuel cell system.

In an example embodiment, the additional system further comprises an additional compressor, in particular a fuel cell compressor, with gas compression means and a rotatable shaft for driving the gas compression means, wherein the at least one gas-static bearing means support the shaft of the additional compressor. In particular, the additional compressor can be realized as described above with respect to the fuel cell compressor, while it shall be clear that the compressor must not necessarily be a fuel cell compressor.

In particular, the additional system comprises a further additional consumer of pressurized gas, in particular a fuel cell, being fluidly connected with the additional compressor, for feeding the further additional consumer with pressurized gas, preferably wherein the brake compressor and the additional compressor are oil-free compressors.

It shall be clear that the further additional consumer shall be different from the brake and from the additional consumer. In particular, in cases where the additional consumer is a gas-static bearing mean, the further additional consumer shall be different from a gas-static bearing mean. In a preferred embodiment, the further additional consumer is a fuel cell. However, it shall be clear that also other consumers can be used. In the preferred embodiment, in which the brake compressor and the additional compressor operate both oil free, for instance the brake compressor with ball bearings and the additional compressor with gas bearings, the risk of pollution of the compressed gas provided by the additional compressor can be minimized so that the arrangement is particularly suitable for application raising high requirements on purity of the compressed gas, such as fuel cells. Preferably, the additional system is the fuel cell system according to the previously described aspect of the invention and in particular of its embodiments.

Thereby, the gas-static bearing means realize the additional consumer. Further, the fluid connection between the brake gas supply and the additional consumer is realized by the bearing gas supply. For this purpose, the bearing gas supply can be realized as previously described. In particular, the bearing gas supply can comprise a gas line system fluidly connecting the gas-static bearing means with the brake gas supply. In particular, the gas line system of the bearing gas supply can be fluidly connected with the previously described additional consumer gas line of the brake gas supply to receive pressurized gas from the brake gas supply. Further, the gas line system of the bearing gas supply can comprise at least one gas-static bearing line, in particular at least one gas-static bearing line for each gas-static bearing means, for feeding the gas-static bearing means with the pressurized gas received from the brake gas supply. Further, the bearing gas supply can comprise the previously described reservoir being fluidly connected with the brake gas supply for storing pressurized gas obtained from the brake gas supply. Further, the bearing gas supply can comprise a control for feeding the gas-static bearing means, in particular with gas from the reservoir, in dependence of the rotational speed of the shaft and/or with gas of a predetermined pressure, in particular as described above.

Further, the invention relates to a vehicle, in particular a commercial vehicle or a rail vehicle, comprising the fuel cell system according to the previously described aspect of the invention and/or the arrangement according to the previously described aspect of the invention, in particular embodiments thereof. In particular in the case of vehicles using a braking system, the brakes of which are actable by pressurized gas, in particular pneumatic braking systems, the brake gas supply can advantageously be used for feeding the gas-static bearing means of the fuel cell compressor.

A further aspect of the invention relates to the use of gas-dynamic bearing means in combination with gas-static bearing means in a gas compressor of a fuel cell system. The inventors have found that the combination of gas-dynamic bearing means with gas-static bearing means is of particular advantage for gas compressors of fuel cell systems because it avoids the use of oil bearings and, compared to ball bearings or pure gas-dynamic bearings, reduces the risk of the formation of abrasive dust between contacting bearing surfaces.

A further aspect of the invention relates to a gas bearing system comprising at least one gas-dynamic bearing, at least one gas -static bearing, and a bearing gas supply being configured to feed pressurized gas individually to the at least one gas-static bearing.

In this regard, individually is to be understood in that the bearing gas supply is configured to feed pressurized gas to the at least one gas-static bearing, or to at least two or three gas-static bearings, without feeding pressurized gas to the at least one gas-dynamic bearing, or at least two or at least three gas-dynamic bearings. This can be realized in that the gas-dynamic bearing is free of gas-static bearing means. In particular, the gas-dynamic bearing can be a pure gas-dynamic bearing. A pure gas-dynamic bearing is in particular to be understood as a gas-dynamic bearing which is not able to generate a load bearing layer as long as a shaft, being supported by the gas-dynamic bearing, does not rotate, in particular, does not reach the lift-up speed. In particular, such pure gas-dynamic bearing can be realized in that the static part and the moving part of the bearing are free of gas passages for feeding pressurized gas into the gap between the static part and the moving part. In particular, the static part and the moving part can be gas tight. In this regard, it shall be clear that gas tight means that no pressurized air enters into the gap via the moving part or the static part. Of course, gas can still enter into the gap via the space between the static part and the moving part.

An alternative embodiment to realize the gas supply of this aspect of the invention comprises a gas line system with a gas-static bearing gas line and a gas-dynamic bearing gas line fluidly connecting a pressurized gas source, such as a reservoir or a compressor, with each of the bearings and a control being configured to initiate gas flow through the gas-static line without feeding gas through the gas-dynamic line. This can for example be realized by valves which can be closed to avoid gas flow through the gas-dynamic line.

The inventors have found that gas-static bearing means, such as gas passages in the static part of the bearings, reduces the efficiency of the gas-dynamic bearing means. Without being bond to an explanation, this might be explained in that the gas passages allow pressurized gas resulting from gas-dynamic effects to escape out of the gap. This can be avoided by using pure gas dynamic bearing means. Further, it seems that pressurized gas entering via gas inlets into the gap of gas-dynamic bearing means interferes the formation of a load bearing gas layer by gas-dynamic effects. This can be avoided by individually supplying the gas-static bearing with pressurized gas, in particular by avoiding that the pressurized gas is fed into the gab of the gas-dynamic bearing means.

Preferably, the gas bearing system is used to support a rotatable shaft, in particular the rotatable shaft of the previously described fuel cell system and/or the rotatable shaft of the previously described additional compressor of the arrangement. In particular, the gas bearing system can be used to support a rotating shaft radially and axially. In particular, for radially supporting the shaft, the gas bearing system can comprise at least two gas dynamic bearings and at least two gas static bearings. Preferably, two groups of bearings are formed, each of which comprises one gas-static bearing and one gas-dynamic bearing, when the two bearing groups are spaced from each other in axial direction of the shaft, preferably are located, in axial direction of the shaft, on opposite sides of a motor, in particular an electric motor, for driving the shaft.

For axially supporting the shaft, at least one additional gas-static bearing and at least one additional gas-dynamic bearing can be provided. The gas bearings for axially supporting the shaft can be located at a disc-shaped portion of the shaft. In particular, the disc-shaped portion can carry, in particular form, the moving part of the bearings while the static part can be carried by a housing of the shaft. In particular, the gas bearings for axially supporting the shaft can be realized as ring-shaped bearings on at least one side, preferably on both sides of the disc-shaped portion.

A further aspect of the invention relates to a gas bearing system, which can be realized as the previously described gas bearing system and vice versa, comprising at least for radial gas bearings being arranged in two radial gas bearing groups, each of which comprises one gas-dynamic bearing and one gas-static bearing.

This allows to stably support a rotating shaft by the two gas-static bearings below the lift-up speed and to stably support the shaft with the two gas-dynamic bearings above the lift-up speed. Thanks to the use of separate gas-dynamic bearings and gas-static bearings for each bearing group, the gas-dynamic bearing can be operated by pure gas-dynamic effects without being interfered by gas-static effects, while the gas-static bearings can be operated without being interfered by gas-dynamic effects. In particular, this configuration of the invention allows to operate the gas-dynamic bearings and the gas-static bearings together during a predetermined rpm range of the shaft without instructing each other. In particular, in a predetermined range above and below the lift-up speed, it can be advisable to operate both bearings at the same time to make sure that abrasive contact between the bearing surfaces when passing the lift-up speed is avoided. For this simultaneous operation, it turned out to be beneficial if separate gas-dynamic bearings and gas-static bearings are used in each gas bearing group so that they do not interfere to each other.

Additionally, a group of axial bearings, comprising one gas-static bearing and one gas-dynamic bearing, in particular as described above, can be added to the gas bearing system. For the previously described aspects relating to gas bearing systems, the gas-dynamic bearings are preferably realized by foil bearings.

A further aspect of the invention relates to a gas bearing system comprising a rotatable shaft and a gas bearing being configured to radially and axially support the rotatable shaft, wherein the gas bearing comprises gas-static bearing means and gas-dynamic bearing means.

Preferably, the gas bearing comprises a moving part being connected with or part of the rotatable shaft and a static part being connecting with or part of housing. Preferably, the shaft comprises a cylindrical portion and a disc-shaped portion. Preferably, the moving part is connected with or part of the cylindrical portion and/or of the disc-shaped portion of the shaft.

The static part preferably comprises a hollow cylindrical portion extending around the cylindrical portion of the shaft and confining a hollow cylindrical gap between the shaft and the static part. Further, the static part preferably comprises a perforated disc-shaped portion extending radially outwards from the hollow cylindrically shaped portion of the static part. Preferably, the perforated disc-shaped portion of the static part extends parallel to the disc-shaped portion of the shaft. Preferably, the disc-shaped portion of the moving part, in particular of the shaft, confines a perforated disc-shaped gap with the perforated disc-shaped portion of the static part. Preferably, the hollow cylindrical portion and the perforated disc-shaped portion of the static part are not fixedly connected with each other, in particular could, to be used in one piece, in particular by casting. Additionally or alternatively, the cylindrical portion and the disc-shaped portion of the rotatable shaft are fixedly connected with each other, in particular produced in one piece, in particular by casting. Preferably, the gas dynamic bearing means are spiral groove bearing means. In particular, the spiral groove bearing means are provided on the moving part, in particular on the cylindrical portion and/or the disc-shaped portion, of the shaft.

With this aspect of the invention, the number of required bearings for axially and radially supporting the shaft by gas-static and gas-dynamic bearing means can be reduced to one bearing. Thereby, costs can be reduced.

Further aspects, properties and features of the invention will become apparent and more appreciated from the following description of exemplary embodiments, taking in conjunction with the accompanying drawings, showing in
- Figure 1: a schematic illustration of an arrangement of a braking system and a fuel cell system;
- Figure 2: an alternative embodiment of the fuel cell system illustrated in figure 1;
- Figure 3: a schematic illustration of a gas-dynamic bearing system using hybrid gas-static-dynamic bearings;
- Figure 4: an alternative embodiment of the gas bearing system shown in figure 3;
- Figure 5: an alternative embodiment of the gas bearing system shown in figure 4;
- Figure 6: a schematic illustration of a gas bearing system comprising four gas-dynamic bearings and one gas-static bearing;
- Figure 7: a schematic illustration of an alternative embodiment of the gas bearing system shown in figure 6;
- Figure 8: a schematic illustration of an alternative embodiment of the gas bearing system illustrated in figures 6 and 7;
- Figure 9: a schematic illustration of a gas bearing system comprising one gas bearing being configured to radially and axially support the rotatable shaft, wherein the gas bearing comprises gas-static bearing means and gas-dynamic bearing means; and
- Figure 10: a schematic illustration of an alternative embodiment of the gas bearing system shown in figure 9.

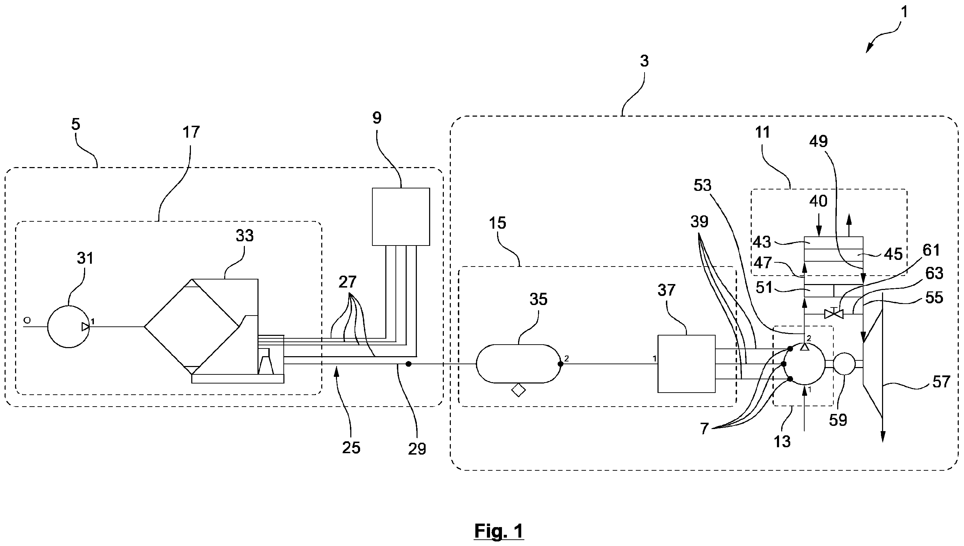

Figure 1 schematically illustrates an arrangement 1 of systems 3, 5 with consumers 7, 9 of pressurized gas. The system 3 illustrates a fuel cell system 3 with a fuel cell 11, a fuel cell compressor 13 and a bearing gas supply 15. The system 5 illustrates a braking system 5 with a brake gas supply 17 for feeding a consumer of pressurized gas in form of a brake 9 (only schematically shown), which is actuated by pressurized gas.

In the fuel cell system 3, the consumer of pressurized gas 7 is realized by three gas-static bearings 7 (schematically illustrated by points) supporting the shaft (not shown) of the fuel cell compressor 13.

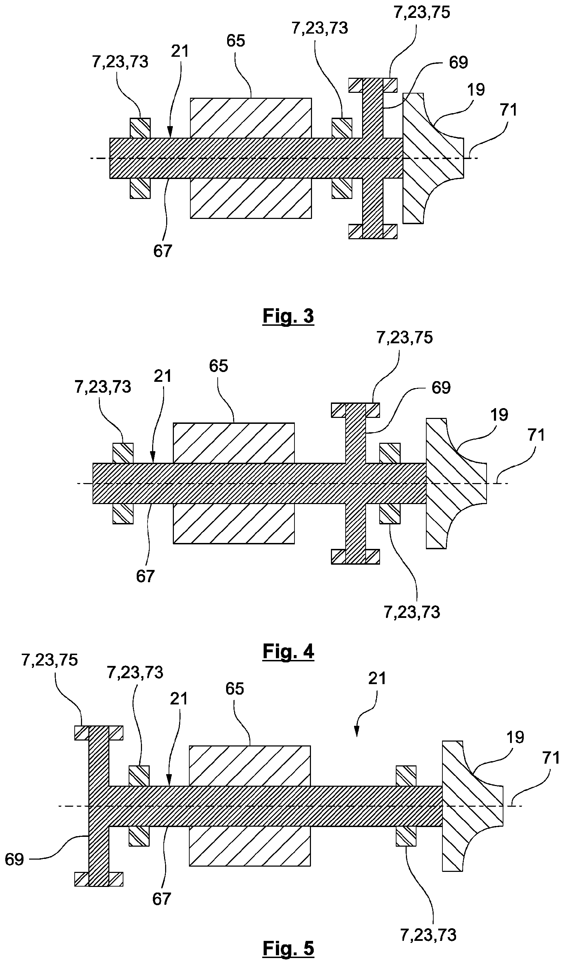

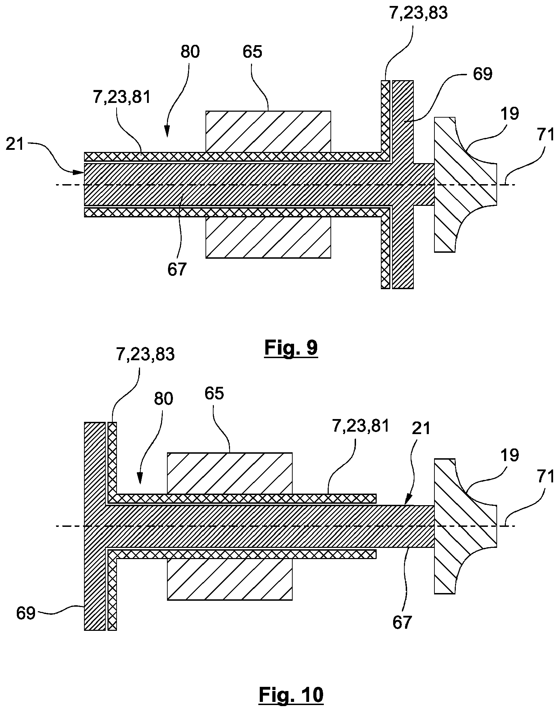

Examples on how the shaft of the fuel cell compressor 13 can be supported by the gas-static bearing means 7 are schematically illustrated in figures 3 - 10. As can be seen therein, the fuel cell compressor comprises gas compression means 19 in the form of a compressor-wheel 19, a rotatable shaft 21 for driving the compression means 19 and a gas bearing system supporting the shaft 21 which comprises gas-static bearing means 7 and gas-dynamic bearing means 23. As will be described below in more detail, figures 3 - 5 illustrate embodiments in which the gas-static bearing means 7 and gas-dynamic bearing means 23 which are integrated in hybrid gas-static-dynamic bearings, in particular into radial hybrid gas-static-dynamic bearings and one axial hybrid gas-static dynamic bearing. Figures 9-10 illustrate similar embodiments, in which the gas-static bearing means 7 and the gas-dynamic bearing means 23 are integrated in one single hybrid gas-static-dynamic bearing being configured to radially and axially support the rotatable shaft 21.

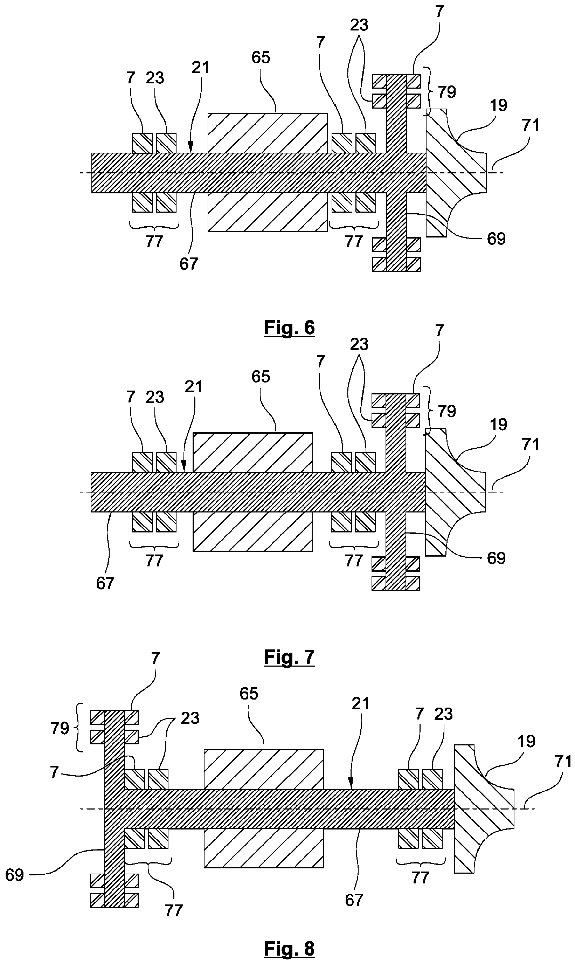

Figures 6 - 8 illustrate embodiments in which the gas-static bearing means 7 and the gas-dynamic bearing means 23 are provided by separate gas bearings, in particular by two radial gas bearing groups, each of which comprises one gas-static bearing 7 and one gas-dynamic bearing 23.

Figure 1 illustrates a preferred embodiment for configuring the bearing gas supply 15 to supply the gas-static bearing means 7 by pressurized gas obtained from an external gas supply, namely from the brake gas supply 17 of the braking system 5. For this purpose, the brake gas supply 17 comprises a gas line system 25 for feeding the brake 9 and the bearing gas supply 15. In particular, the gas line system 25 comprises a plurality of brake gas lines 27 for feeding the brake 9 with pressurized gas and a bearing gas supply gas line 29 for feeding the bearing gas supply 15. The brake gas supply 17 further comprises a brake gas compressor 31 for producing pressurized gas and a control 33, which can further act as gas treatment unit, for initiating and stopping gas flow from the brake compressor 31 to the brake 9 and to the bearing gas supplier 15.

For storing the pressurized gas received from the brake gas supply 17, the bearing gas supply 15 comprises a reservoir 35. Further, the bearing gas supply 15 comprises a control 37 being configured to feed the gas-static bearing means 7 in dependence of the rotational speed of the shaft 21 and/or with gas of a predetermined pressure. For this purpose, the control 33 can comprise pressure control valves and/or multiport valves. In particular, the control 37 comprises one gas-static bearing gas line 39 for each gas-static bearing means 7 to be fed with pressurized gas.

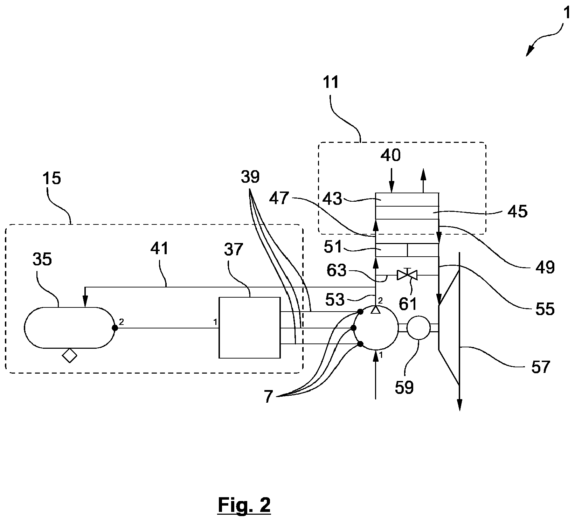

An alternative embodiment of the bearing gas supply 15 is illustrated in figure 2 which is identical to the one of the fuel cell system 3 illustrated in figure 1 with the only differences that the bearing gas supply 15 comprises an internal supply gas line 41 fluidly connecting the gas of the fuel cell compressor 13 with the reservoir 35 and in that the fluid connection with the braking system (not shown in figure 2) is respectively omitted. With the embodiment shown in figure 2, the pressurized gas for feeding the gas-static bearing means 7 can be obtained from the fuel cell compressor 13 itself.

The fuel cell 11 comprises an anode chamber 43 which is fed with hydrogen 40. Further, the fuel cell 11 comprises a cathode chamber 45 which is fed with pressurized and humidified air 47 and which releases exhaust gas 49 carrying water produced in the fuel cell 11. The fuel cell system 3 comprises a humidifier 51 which extracts water from the exhaust gas 49 and loads it on the compressed air 53 leaving the compressor 13. Afterwards, the exhaust gas 49 with reduced water content 55 passes an expander 57 which supports a motor 59 in driving the fuel cell compressor 13.

The fuel cell system 3 further comprises a bypass valve 61 for bypassing pressurized gas 53 leaving the fuel cell compressor 13 via a bypass gas line 63 directly to the expander 57 if a predetermined pressure is exceeded.

In figures 3 - 10, an electric motor for driving the shaft 21 is designated with reference sign 65. The electric motor 65 extends circumferentially around the shaft 21. The shaft 21 comprises a cylindrical portion 67 and a disc-shaped portion 69. The compressor wheel 19 is fixedly connected with the shaft 21 in that it rotates with the same rotational speed as the shaft 21. Figures 3 - 5 all illustrate embodiments in which the gas-dynamic bearing means 23 and the gas-static bearing means 7 are integrated in three hybrid gas-static-dynamic bearings 73 (hybrid bearing). Two of the hybrid bearings 73 are radial bearings radially supporting the shaft 21, in particular the cylindrical shaft portion 67. The embodiments of figures 3 - 5 have in common that the electric motor 65 is located in axial direction with respect to the shaft axis 71 in between the two hybrid radial bearings 73. Figure 3 shows an embodiment in which the disc-shaped portion 69 is located between one hybrid radial bearing 73 and the compressor wheel 19. Figure 4 illustrates an alternative embodiment in which the disc-shaped portion 69 is located in between the electric motor 65 and one radial hybrid bearing 73. Figure 5 illustrates an alternative embodiment in which the disc-shaped portion 69 is located on the sight of the cylindrical portion 67 facing away from the compressor wheel 19.

All embodiments shown in figures 3 - 5 have in common that the gas bearing system comprises hybrid axial bearings 75 located at the disc shaped portion 69 of the shaft 21. Thereby, the axial bearings 75 are realized by a moving part being supported, in particular realized, by the disc shaped portion 69 and two static parts being located in axial direction 71 on both sides of the disc shaped section 69.

Preferably, the static parts of the radial bearings 73 and of the axial bearing 75 are ring shaped, in particular have a ring shape with the shaft axis 71 as symmetry axis.

Figures 6 - 8 illustrate embodiments of gas bearing systems being identical to the gas bearing systems shown in figures 3 - 5 with the only difference that, instead of hybrid gas-static-dynamic bearings, gas bearing groups 77, 79 are provided, each of which comprises one gas-dynamic bearing 23 and one gas-static bearing 7. In particular, two radial gas bearing groups 77 are provided and one axial bearing group 79.

The shaft 21 and the compressor wheel 19 of the gas bearing system shown in figure 9 is identical to the one shown in figure 3. The shaft 21 and the compressor wheel 19 shown in figure 10 are identical to the one shown in figure 5. The electric motor 65 differs from those shown in figures 3 and 5 in that the gap between the hollow cylindrical electric motor 65 and the cylindrical portion 67 of the shaft 21 is larger. This enables providing a gas bearing with a static part 80 extending continuously, in axial direction, from one side of the electric motor 65 between a gap between the electric motor 65 and the cylindrical portion 67 of the shaft 21 through the other side of the cylindrical portion 67. This allows using a single gas bearing for radially supporting the shaft 21 instead of two hybrid radial gas bearings 73 as shown in figures 3 - 5 or two radial gas bearing groups 77 as shown in figures 6 - 8. In particular, the static part 80 of the gas bearing in figures 9 - 10 comprises a hollow cylindrical portion 81 surrounding the cylindrical portion 67 of the shaft 21. The static part 80 further comprises a perforated disc shaped portion 83 extending from the hollow cylindrical portion 81 radially to the outside. In particular, the perforated disc shaped portion 83 of the static part 80 extends parallel to the disc shaped portion 69 of the shaft 21. In particular, the perforated disc shaped portion 83 and the hollow cylindrical portion 81 of the static part 80 are formed as one piece in particular by casting. In particular, the static part 80 and the shaft 21 delimit between the cylindrical portion 67 of the shaft 21 and the hollow cylindrical portion 81 of the static part 80 a hollow cylindrical gap and between the disc shaped portion 69 of the shaft 21 and the perforated disc shaped portion 83 of the static part 80 a perforated disc shaped gap. In particular, the perforated disc shaped gap and the hollow cylindrical shaped gap merch continuously into each other. Preferably, the static or the moving part, in particular the moving part comprises gas-dynamic bearing means, preferably spiral grooved bearing means.

The features disclosed in the above description, the figures and the claims might be significant for the realization of the invention in its different embodiments individually as in any combination.

### Reference signs

- 1: arrangement of systems with consumers of compressed gas
- 3: fuel cell system
- 5: brake gas system
- 7: gas-static bearing / gas-static bearing means
- 9: brake
- 11: fuel cell
- 13: fuel cell compressor
- 15: bearing gas supply
- 17: brake gas supply
- 19: compressor wheel
- 21: rotatable shaft
- 23: gas-dynamic bearing / gas-dynamic bearing means
- 25: gas line system
- 27: brake gas line
- 29: bearing gas supply gas line
- 31: brake compressor
- 33: brake system control / air treatment unit
- 35: reservoir
- 37: bearing gas supply control / gas control valve unit
- 39: gas-static bearing gas line
- 40: hydrogen
- 41: internal supply gas line
- 43: anode chamber
- 45: cathode chamber
- 47: pressurized and humidified gas/air
- 49: water loaded exhaust gas/air
- 51: humidifier
- 53: pressurized gas/air
- 55: exhaust gas/air with reduced water content
- 57: expander
- 59: motor
- 61: bypass valve
- 63: bypass gas line
- 65: compressor motor
- 67: cylindrical shaft portion
- 69: disc-shaped shaft portion
- 71: shaft axis
- 73: hybrid radial bearing
- 75: hybrid axial bearing
- 77: radial gas bearing group
- 79: axial gas bearing group
- 80: static part
- 81: hollow cylindrically shaped static part
- 83: perforated disc shaped static part

## Claims

1. A fuel cell system (3), comprising:
- a fuel cell (11);
- a fuel cell compressor (13) for feeding the fuel cell (11) with pressurized gas, comprising gas compression means (19), a rotatable shaft (21) for driving the gas compression means (19), and a gas bearing system supporting the shaft (21), wherein the gas bearing system comprises gas-dynamic bearing means (23) and gas-static bearing means (7); and
- a bearing gas supply (15) for feeding the gas-static bearing means (7) with pressurized gas.

2. The fuel cell system (3) according to claim 1, wherein the bearing gas supply is configured to supply the gas-static bearing means (7)
- by pressurized gas obtained from the fuel cell compressor (13) or
- by pressurized gas obtained from an external gas supply (17), in particular from a brake gas supply (17) of a braking system (5).

3. The fuel cell system (3) according to claim 1 or 2,
wherein the bearing gas supply comprises
- a reservoir (35) for storing pressurized gas, in particular pressurized gas with at least 5, 8, 10 or 12 bar, and/or
- a control (37) being configured to feed the gas-static bearing means (7) in dependence of the rotational speed of the shaft (21) and/or with gas of a predetermined pressure.

4. The fuel cell system (3) according to one of the 1 to 3, wherein
- the gas-dynamic bearing means (23) and the gas-static bearing means (7) are integrated in at least one hybrid gas-static-dynamic bearing/s (73, 75), in particular by a gas bearing system according to claim 15 or by at least two, preferably in at least three, hybrid gas-static-dynamic bearing/s (73, 75), or wherein
- the gas-dynamic bearing means (23) and the gas-static means (7) are provided by separate gas bearings, preferably by at least two gas dynamic bearings (23) and at least two gas static bearings (7), more preferably by at least three gas dynamic bearings (23) and at least three gas static bearings (7), most preferably by a gas bearing system according to one of the claims 13 or 14.

5. An arrangement (1) of systems (3, 5) with consumers (7, 9) of pressurized gas, comprising
- a braking system (5) with a brake (9) being actuatable by pressurized gas and a brake gas supply (17) for feeding the brake (9) with pressurized gas, and
- an additional system (3) comprising an additional consumer (7) of pressurized gas, wherein the additional consumer (7) is fluidly connected with the brake gas supply (17) so that the additional consumer (7) is feedable with pressurized gas from the brake gas supply (17).

6. The arrangement (1) of claim 5, wherein the brake gas supply (17) comprises a brake compressor (31) for producing pressurized gas and preferably
- a gas line system (25) for feeding the brake (9) and the additional consumer (7) with pressurized gas obtained from the brake compressor (31) and/or
- a control (33) for initiating and stopping gas flow from the brake compressor (31) to the brake (9) and/or to the additional consumer (7).

7. The arrangement (1) according to claim 5 or 6, wherein the additional consumer (7) comprises at least one, preferably at least two or three, gas-static bearing means (7) being fluidly connected with the brake gas supply (7), preferably wherein the additional system (3) further comprises at least one, more preferably at least two or three, gas-dynamic bearing means (23).

8. The arrangement (1) according to claim 7, wherein the additional system (3) further comprises
- an additional compressor (13), in particular a fuel cell compressor (13), with gas compression means (19) and a rotatable shaft (21) for driving the gas compression means (19), wherein the at least one gas-static bearing means (7) support the shaft (21) of the additional compressor (13).

9. The arrangement (1) according to claim 8, wherein
- the additional system (3) comprises a further additional consumer (11) of pressurized gas, in particular a fuel cell (11), being fluidly connected with the additional compressor (13), for feeding the further additional consumer (11) with pressurized gas, preferably wherein the brake compressor (31) and the additional compressor (13) are oil free compressors.

10. The arrangement (1) according to one of the claims 5 to 9, wherein the additional system (3) is a fuel cell system (3) according to one of the claims 1 to 4, wherein the gas-static bearing means (7) realize the additional consumer (7) and wherein the fluid connection between the brake gas supply (17) and the additional consumer (7) is realized by the bearing gas supply (15).

11. A vehicle, in particular a commercial vehicle or a rail vehicle, comprising:
- a fuel cell system (3) according to one of the claims 1 to 4 and/or
- an arrangement (1) according to one of the claims 5 to 10.

12. Use of gas-dynamic bearing means (23) in combination with gas-static bearings means (21) in a gas compressor (13) of a fuel-cell system (3).

13. A gas bearing system, comprising
- at least one a gas dynamic bearing (23),
- at least one gas static bearing (7), and
- a bearing gas supply (15) being configured to feed pressurized gas individually to the at least one gas static bearing (7).

14. A gas bearing system, in particular according to claim 13, comprising
- at least four radial gas bearings (7, 23) being arranged in two radial gas bearing groups (77), each of which comprise one gas dynamic bearing (23) and one gas static bearing (7).

15. A gas bearing system, comprising
- a rotatable shaft (21) and
- a gas bearing (81, 83) being configured to radially and axially support the rotatable shaft (21), wherein the gas bearing comprises gas-static bearing means (7) and gas-dynamic bearing means (23).
